# EUROPÄISCHE PATENTANMELDUNG

(11) **EP 4 755 572 A1**
(43) Veröffentlichungstag der Anmeldung: **10.06.2026**
(21) Anmeldenummer: 24217501.6
(22) Anmeldetag: 04.12.2024
(51) Int. Cl.: B23Q 1/70, B23Q 17/09

(54) **KRAFTMESSENDER LAGERFLANSCH**

(71) Anmelder: Innomotics GmbH, 90441 Nürnberg (DE)
(72) Erfinder: Butz, Felix, 97421 Schweinfurt (DE); Helbig, Michael, 96106 Ebern (DE)
(74) Vertreter: Michalski Hüttermann & Partner mbB

(57) **Zusammenfassung**

Bei einer Spindel (10, 30), insbesondere Werkzeug- und/oder Werkstückspindel, umfassend wenigstens ein Spindelgehäuse (32), ein Spindellager (33, 34) und einen Lagerflansch (35) zur Aufnahme des Spindellagers (33, 34) und zur Befestigung an dem Spindelgehäuse (32), wobei der Lagerflansch (35) wenigstens ein Lageraufnahmeteil (36) zur Aufnahme des Spindellagers (33, 34) und ein Befestigungsteil (37) zur Befestigung des Lagerflansches (35) an dem Spindelgehäuse (32) aufweist, sollen die während der Bearbeitung eines Werkstücks auf die Spindel einwirkenden Kräfte mit verhältnismäßig einfachen Mitteln und mit hoher Genauigkeit bestimmt werden.

Die Erfindung sieht vor, dass der Lagerflansch (35) der Spindel (10, 30) wenigstens ein Sensorelement (44) zum Bestimmen einer elastischen Verformung des Lagerflansches (35) infolge einer äußeren, auf die Spindel (10, 30) ausgeübten Kraft aufweist.

Die Kraftmessung erfolgt so an einem nicht rotierenden Teil der Spindel und ist damit mit hoher Genauigkeit und kostengünstig möglich.

## Beschreibung

Die Erfindung betrifft eine Spindel, insbesondere Werkzeug- und/oder Werkstückspindel, umfassend wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist.

Weiterhin betrifft die Erfindung einen Lagerflansch für eine Spindel, insbesondere eine Werkzeug- oder Werkstückspindel, umfassend wenigstens ein Lageraufnahmeteil zur Aufnahme des Spindellagers und ein Befestigungsteil zur Befestigung des Lagerflansches an einem Spindelgehäuse.

Ferner betrifft die Erfindung eine Maschine, insbesondere eine Werkzeugmaschine oder einen Roboter.

Darüber hinaus betrifft die Erfindung ein Verfahren zum Erfassen einer Kraft, die während der Bearbeitung eines Werkstücks durch ein Werkzeug mittels einer Maschine auf die Maschine einwirkt, wobei die Maschine wenigstens eine Spindel zur Befestigung und/oder Bewegung eines Werkzeugs oder Werkstücks umfasst, wobei die Spindel wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist, wobei das Lageraufnahmeteil und das Befestigungsteil durch wenigstens ein elastisch verformbares Verbindungsmittel elastisch miteinander verbunden sind.

Bei vielen Maschinen kommen zur Bewegung oder Befestigung von Teilen Spindeln zum Einsatz. Zum Beispiel werden bei einer Werkzeugmaschine Werkzeuge oder Werkstücke an einer Werkzeug- oder Werkstückspindel befestigt und angetrieben. Bei der zerspanenden Metallbearbeitung mittels einer Werkzeugmaschine entstehen zum Teil so große Kräfte, dass Schäden an dem Werkzeug oder der Maschine, insbesondere der Hauptspindel, entstehen können oder die Standzeit der verwendeten Werkzeuge reduziert wird.

Die tatsächlich wirkenden Kräfte sind oft nicht bekannt und häufig nur durch relativ ungenaue Berechnungsmodelle abschätzbar oder durch kostenintensive Messtechnik erfassbar. Die Kenntnis der wirkenden Kräfte ist unter anderem wichtig für Prozessüberwachung, Qualitätssicherung, Condition Monitoring sowie Beurteilung des Werkzeugverschleißes.

Aus der WO 2022/229076 sind verschiedene Methoden bekannt, um Kräfte, die bei der zerspanenden Bearbeitung eines Werkstücks mittels einer Werkzeugmaschine am Werkzeug auftreten, zu bestimmen. So können die Kräfte anhand einer Simulation der Bearbeitung bestimmt werden oder sie werden anhand der Ströme, die den Antrieben der Werkzeugmaschine, insbesondere der Werkzeugspindel, zugeführt werden, ermittelt. Diese Methoden sind aufwändig und führen mitunter zu ungenauen Ergebnissen.

Aufgabe der vorliegenden Erfindung ist es, auf eine Spindel einwirkende Kräfte mit verhältnismäßig einfachen Mitteln und mit hoher Genauigkeit zu bestimmen.

Diese Aufgabe wird gelöst durch eine Spindel mit den Merkmalen gemäß Anspruch 1, also eine Spindel, insbesondere Werkzeug- und/oder Werkstückspindel, umfassend wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist, wobei der Lagerflansch wenigstens ein Sensorelement zum Bestimmen einer elastischen Verformung des Lagerflansches infolge einer äußeren, auf die Spindel ausgeübten Kraft aufweist.

Ferner wird die Aufgabe gelöst durch einen Lagerflansch für eine Spindel mit den Merkmalen gemäß Anspruch 10, also einen Lagerflansch für eine Spindel, insbesondere eine Werkzeug- oder Werkstückspindel, umfassend wenigstens ein Lageraufnahmeteil zur Aufnahme des Spindellagers und ein Befestigungsteil zur Befestigung des Lagerflansches an einem Spindelgehäuse, wobei der Lagerflansch wenigstens ein Sensorelement zum Bestimmen einer elastischen Verformung des Lagerflansches infolge einer äußeren, auf die Spindel ausgeübten Kraft aufweist.

Weiterhin wird die Aufgabe gelöst durch eine Maschine nach Anspruch 13, also eine Maschine, insbesondere Werkzeugmaschine oder Roboter, umfassend eine Spindel nach einem der Ansprüche 1 bis 9.

Darüber hinaus wird die Aufgabe gelöst durch ein Verfahren zum Erfassen einer Kraft mit den Merkmalen gemäß Patentanspruch 14, also ein Verfahren zum Erfassen einer Kraft, die während der Bearbeitung eines Werkstücks durch ein Werkzeug mittels einer Maschine auf die Maschine einwirkt, wobei die Maschine wenigstens eine Spindel zur Befestigung und/oder Bewegung eines Werkzeugs oder Werkstücks umfasst, wobei die Spindel wenigstens ein Spindelgehäuse, ein Spindellager und einen Lagerflansch zur Aufnahme des Spindellagers und zur Befestigung an dem Spindelgehäuse, wobei der Lagerflansch wenigstens ein Lageraufnahmeteil zur Aufnahme des Spindellagers und ein Befestigungsteil zur Befestigung des Lagerflansches an dem Spindelgehäuse aufweist, wobei das Lageraufnahmeteil und das Befestigungsteil durch wenigstens ein elastisch verformbares Verbindungsmittel elastisch miteinander verbunden sind und wobei das elastisch verformbare Verbindungsmittel wenigstens ein Sensorelement aufweist, mit dem eine elastische Verformung des elastisch verformbaren Verbindungsmittels bestimmt wird und wobei anhand der elastischen Verformung auf die für diese elastische Verformung ursächliche Kraft rückgeschlossen wird.

Die Erfindung bietet den Vorteil, dass die Kräfte, die bei der Bearbeitung eines Werkstücks mittels eines Werkzeugs direkt an der Stelle der Maschine erfasst werden, an der sie von dem Werkzeug bzw. Werkstück auf die Maschine übertragen werden, nämlich dem werkzeug- bzw. werkstückseitigen Lagerflansch der Spindel.

Eine Spindel, insbesondere eine Werkzeug- oder eine Werkstückspindel, ist ein zentrales Bauteil in Werkzeugmaschinen wie Drehmaschinen, Fräsmaschinen und Bohrmaschinen. Sie dient dazu, das Werkzeug bzw. Werkstück zu halten und in Rotation zu versetzen, um das Werkstück mittels des Werkzeugs zu bearbeiten.

Eine Spindel umfasst mehreren wesentlichen Komponenten, die zusammenarbeiten, um eine präzise und effiziente Bearbeitung des Werkstücks zu ermöglichen. Übliche Komponenten sind:
- Ein (Spindel-) Gehäuse.
- Lager: Diese halten die Spindelwelle in Position und reduzieren die Reibung während der Rotation. Präzisionslager sind besonders wichtig, da sie hohe Drehzahlen und Belastungen aushalten müssen. Üblicherweise werden Wälzlager, insbesondere Kugellager, verwendet.
- Lagerflansche: Diese dienen zur Befestigung der Lager an dem Gehäuse.
- Eine Spindelwelle: Sie überträgt die Kraft des Motors auf das Werkzeug und muss extrem präzise gefertigt sein, um Vibrationen zu minimieren und eine hohe Genauigkeit zu gewährleisten.
- Eine Motor- bzw. Antriebseinheit: Diese treibt die Spindelwelle an. Es gibt verschiedene Motorenarten, wie Direktantriebsmotoren oder Riemenantriebssysteme, die je nach Anwendungsbereich eingesetzt werden.
- Kühl- und Schmierungssysteme: Diese sind essenziell, um die Wärmeentwicklung in der Spindel zu kontrollieren und die Lebensdauer der Spindel zu erhöhen.
- Eine Werkzeug- oder Werkstückaufnahme: Dies ist das Verbindungselement zwischen der Spindel und dem Werkzeug bzw. Werkstück. Sie muss sehr stabil und präzise sein, um das Werkzeug bzw. Werkstück sicher zu fixieren und hohe Drehzahlen zu ermöglichen.

Durch die Kraftmessung am (werkzeug- bzw. werkstückseitigen) Lagerflansch ermöglicht die Erfindung die Krafterfassung im stehenden Bauteil, was - um Gegensatz zu einer Kraftmessung im bewegten bzw. rotierenden Bauteil - eine erprobte und kostengünstige Methode zur Erfassung von Kräften darstellt. Die Messung der Dehnungen soll direkt am bzw. im Lagerflansch erfolgen, welcher typischerweise massiv ausgeführt und dementsprechend steif ist. Dies macht die Erfassung einer Dehnung im messbaren Bereich schwierig.

Eine bevorzugte Ausführungsform der Erfindung sieht daher vor, dass der erfindungsgemäße Lagerflansch so ausgeführt ist, dass durch konstruktive Maßnahmen die Nachgiebigkeit der Spindel in axialer und/oder radialer Richtung deutlich erhöht wird.

Bisher wurden Spindeln für Werkzeugmaschinen (Werkzeugspindeln, Werkstückspindeln) insgesamt möglichst steif ausgeführt, um eine möglichst hohe Positioniergenauigkeit des Werkzeugs und/oder Werkstücks zu erreichen.

Insbesondere wurden Lagerflansche für Spindeln so ausgeführt, dass das Lageraufnahmeteil zur Aufnahme des Spindellagers und das Befestigungsteil zur Befestigung des Lagerflansches an dem Spindelgehäuse möglichst steif und massiv ausgeführt wurden. Eine elastische Verformung zwischen den beiden genannten Teilen des Lagerflansches war unerwünscht und zu vermeiden.

Anders hingegen bei dem erfindungsgemäßen Lagerflansch, bei dem bei der genannten Ausführungsform eine gewisse Elastizität zwischen dem Lageraufnahmeteil und dem Befestigungsteil des Lagerflansches erwünscht ist. Durch die Verwendung des speziellen Lagerflansches wird insbesondere gezielt die Elastizität der Spindel erhöht bzw. die Steifigkeit reduziert, um dadurch Ratterschwingungen entgegenzuwirken.

Die Nachgiebigkeit des Lagerflansches ist in einer Weise zu erhöhen, dass die Gesamtnachgiebigkeit an der Werkzeugschnittstelle ein gewisses Grenzmaß nicht überschreitet, aber dennoch so hoch ist, dass die elastischen Dehnungen der Struktur durch herkömmliche Sensorelemente wie Dehnungsmessstreifen (DMS) gemessen werden kann.

Die gewünschte Nachgiebigkeit wird insbesondere dadurch erreicht, dass das Lageraufnahmeteil und das Befestigungsteil durch wenigstens ein elastisch verformbares Verbindungsmittel elastisch miteinander verbunden sind. Vorteilhaft ist das Sensorelement zum Bestimmen einer elastischen Verformung des elastisch verformbaren Verbindungsmittels von dem elastisch verformbaren Verbindungsmittel umfasst oder an dem elastisch verformbaren Verbindungsmittel angeordnet bzw. befestigt. Das Sensorelement befindet sich demnach in einem Bereich des Lagerflansches, in dem unter einer äußeren Kraft die größte Verformung auftritt.

Eine Ausführungsform der Erfindung sieht vor, dass das elastisch verformbare Verbindungsmittel wenigstens einen Stab und/oder eine Strebe, insbesondere eine Vielzahl an Stäben und/oder Streben umfasst oder als Stab und/oder Strebe, insbesondere als Vielzahl an Stäben und/oder Streben ausgebildet ist, wobei wenigstens eine Sensorelement an wenigstens einem Stab und/oder wenigstens einer Strebe angeordnet ist. Insbesondere durch die Anzahl, die Grö-βenabmessungen (Dimensionierung), die Verteilung, die Ausrichtung oder die verwendeten Materialien der Stäbe oder Streben kann hier in vielfältiger Weise auf die elastischen Eigenschaften des Lagerflansches und damit der Spindel als solche eingewirkt werden. Die Stäbe oder Streben sind vorzugsweise gleichmäßig flach bzw. plattenförmig ausgebildet.

Der Lagerflansch kann beispielsweise wie ein Speichenrad ausgeführt sein. Dabei ist ein Teil des Lagerflansches, in welchem das oder die Wälzlager aufgenommen sind und die Spindelwelle führen, über eine definierte Anzahl und Ausführung von Stäben bzw. Streben mit einem stehenden Außenteil verbunden. Auf ebendiesen Stäben bzw. Streben findet die größte Verformung bei äußerer Belastung statt, weswegen hier der optimale Ort zur Anbringung der Sensorelemente ist.

Vorteilhaft sind das Lageraufnahmeteil, das Befestigungsteil und das elastisch verformbare Verbindungsmittel einstückig ausgebildet. Dies vereinfacht die Herstellung und reduziert die Herstellungskosten.

Neben Stäben und/oder Streben kommt eine Vielzahl an weiteren konstruktiven Gestaltungsmöglichkeiten in Betracht, um die beabsichtigte Verformbarkeit bzw. Elastizität des elastisch verformbaren Verbindungsmittels zu erreichen. Beispielsweise könnte dieses wenigstens im Wesentlichen auch bogenförmig, trichterförmig, tellerförmige etc. ausgebildet sein.

Zur weiteren Vergrößerung der Elastizität kann die gewählte Form des elastisch verformbaren Verbindungsmittels zumindest abschnittsweise auch zickzackförmig, wellenförmig bzw. gewellt, spiralförmig etc. ausgebildet sein.

Das Lageraufnahmeteil, das Befestigungsteil und das elastisch verformbare Verbindungsmittel sind vorzugsweise einstückig ausgebildet und in einem Arbeitsgang hergestellt, z.B. einem Metallguss- oder einem 3D-Druck-Verfahren. Verzugsweise bestehen die drei Teile aus demselben Material. Die genannten Maßnahmen ermöglichen jeweils eine einfache und kostengünstige Herstellung bei guten mechanischen Eigenschaften.

Vorzugsweise sind die Stäbe oder Streben, die das Lageraufnahmeteil und das Befestigungsteil miteinander verbinden, gleichmäßig über den Umfang des Lagerflansches verteilt. Insbesondere sind genau vier oder vielfache von vier, gleichmäßig über den Umfang des Lagerflansches verteilte Stäbe oder Streben vorhanden, so dass der Lagerflansch Kräfte in beliebiger radialer Richtung aufnehmen und dämpfen kann.

Bei einer bevorzugten Ausführungsform der Erfindung ist das elastisch verformbare Verbindungsmittel, insbesondere bezüglich eines Querschnitts, um einen Winkel im Bereich von 30° bis 60°, insbesondere 45°, gegenüber einer Spindelachse (Spindellängsachse) geneigt. Insbesondere sind bei einer Ausgestaltung des elastisch verformbaren Verbindungsmittels in Form einer Anzahl an Stäben und/oder Streben die Stäbe bzw. Streben um einen Winkel im Bereich zwischen 30° und 60°, insbesondere 45°, gegenüber der Spindelachse geneigt. Dadurch wird sowohl in axialer als auch in radialer Richtung eine hohe und insbesondere in beiden Richtungen zumindest näherungsweise gleiche Elastizität erreicht.

Die gewünschte elastische Verformbarkeit kann auch oder zusätzlich durch besondere Materialeigenschaften des elastisch verformbares Verbindungsmittels gegenüber dem Lageraufnahmeteil und dem Befestigungsteil erreicht werden. Für das elastisch verformbare Verbindungsmittel würde dazu eine andere Materialzusammensetzung, insbesondere ein "weicheres" Material gewählt werden als für die übrigen Teile des Lagerflansches.

Bei einer Ausführungsform der Erfindung ist der Lagerflansch in einem 3D-Druck-Verfahren hergestellt. Dadurch sind auch komplizierte Formen des elastisch verformbare Verbindungsmittels, z.B. in Form einer Anzahl an gewellten oder gebogenen Streben, aber auch unterschiedliche Materialzusammensetzungen in unterschiedlichen Bereichen, in einfacher Weise herstellbar.

Bei einer Ausführungsform der Erfindung weist der Lagerflansch wenigstens einen Kühlkanal, insbesondere eine Vielzahl an Kühlkanälen, zur Durchleitung eines Kühlmediums zur Kühlung des Lagerflansches und insbesondere des Spindellagers auf. Auch diese Variante ist vorteilhaft mittels 3D-Druck herstellbar.

Dadurch dass die elastische Verformung des Lagerflansches wenigstens im Wesentlichen auf einen bestimmten Bereich des Lagerflansches beschränkt ist, lässt sich die Verformung in eben diesem Bereich besonders gut und einfach mit wenigstens einem Sensorelement messen.

Als Sensorelement kommen insbesondere bereits genannte Dehnmessstreifen (DMS) in Betracht. Diese sind in vielfältigen Ausführungsformen und insbesondere kostengünstig am Markt verfügbar. Auch die Anbringung der Dehnmessstreifen an der Oberfläche der Stäbe bzw. Streben gestaltet sich sehr einfach, z.B. durch Verkleben. Die Einbringung von Sensorelementen in die Stäbe oder Streben, z.B. durch Verguss, ist ebenfalls möglich, aber eine entsprechend aufwändigere und teurere Alternative.

Die Erfindung ist jedoch nicht auf die Verwendung von Dehnmessstreifen beschränkt. Prinzipiell können auch andere Sensorelemente zum Bestimmen einer Dehnung oder Stauchung des wenigstens einen elastischen Verbindungselements verwendet werden, z.B. Wegsensoren oder Lichtleitfasern.

Vorteilhaft ist das elastisch verformbare Verbindungsmittel derart ausgestaltet, dass daran wenigstens vier Sensorelemente jeweils um 90° versetzt bezüglich der Spindelachse an dem Lagerflansch angeordnet werden können. Durch diese Anordnung der Sensorelemente kann auch die Richtung, mit der eine äußere Kraft auf den Lagerflansch einwirkt, gut bestimmt werden.

Vorteilhaft ist ferner eine erfindungsgemäße Maschine dadurch gekennzeichnet, dass sie eine erfindungsgemäße Spindel umfasst. Die erfindungsgemäße Maschine ist vorzugsweise als Werkzeugmaschine bzw. Roboter ausgebildet und die Spindel ist mit einem Werkzeug verbindbar und die Bewegung des Werkzeugs ist derart steuerbar, dass damit eine beabsichtigte Be- und/oder Verarbeitung oder Herstellung eines Werkstücks erfolgt. Bei einem erfindungsgemä-βen Roboter ist die erfindungsgemäße Spindel am vorderen Ende des Roboterarms bzw. Manipulators angebracht.

Die Erfindung wird nachfolgend anhand von Ausführungsbeispielen exemplarisch näher beschrieben und erläutert. Dabei zeigen:
- FIG 1: Eine Werkzeugmaschine mit einer Werkzeugspindel,
- FIG 2: eine Schnittdarstellung einer herkömmlichen Motorspindel,
- FIG 3: eine Schnittdarstellung einer erfindungsgemäßen Motorspindel,
- FIG 4: einen Lagerschild einer erfindungsgemäßen Motorspindel in räumlicher Ansicht,
- FIG 5: eine bevorzugte Ausführungsform eines erfindungsgemäßen Lagerschildes,
- FIG 6: Verfahrensschritte bei der Ausführung eines erfindungsgemäßen Verfahrens.

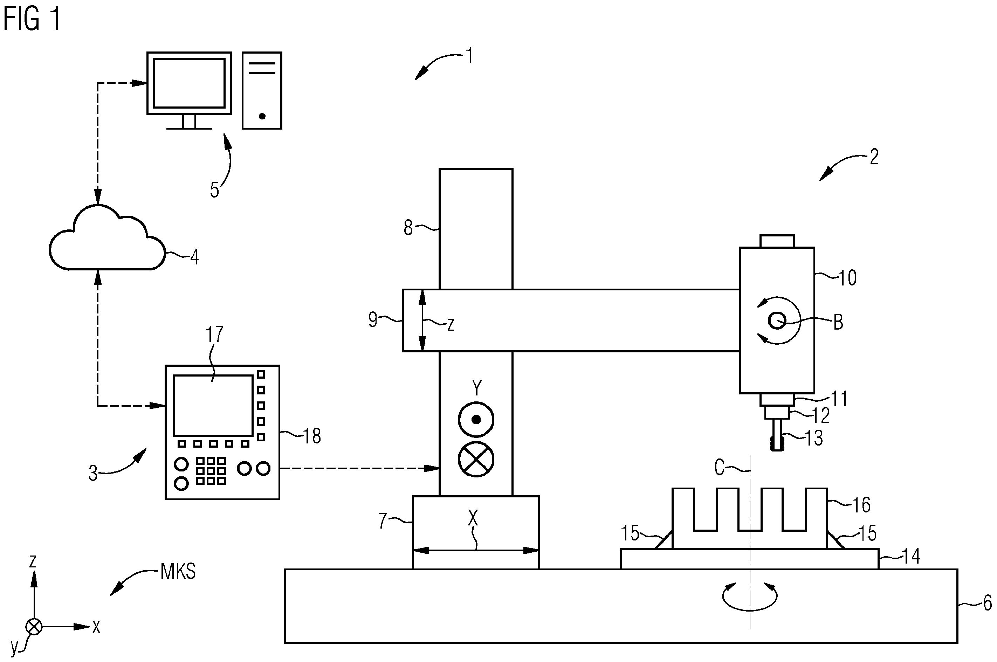

In FIG 1 ist schematisiert ein Bearbeitungsmaschinensystem in Form eines Werkzeugmaschinensystems 1 dargestellt. Das Werkzeugmaschinensystem 1 umfasst eine Bearbeitungsmaschine in Form einer Werkzeugmaschine 2. Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines CAD/CAM-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt eine Motorspindel 10, die um eine zur Y-Achse parallele, lagegeregelte Rundachse B schwenkbar ist. Die Motorspindel 10 weist ihrerseits eine um eine Spindelachse (in FIG 1 nicht dargestellt) rotierbare, drehzahl- und/oder lagegeregelte Spindelwelle 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit dem ruhenden Maschinengestellt 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM-System 5 und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Bei dem Ausführungsbeispiel gemäß FIG 1 sind die CNC-Steuerung 3 und/oder die externe Recheneinrichtung 5 dazu eingerichtet, eine reale Bearbeitung des Werkstücks 16 mittels der Werkzeugmaschine 2 zunächst zu simulieren. Hierfür sind digitale Repräsentationen wenigstens aller wesentlichen Komponenten der Werkzeugmaschine 2, des Werkzeugs 13 sowie des Werkstücks 16 in der CNC-Steuerung 3 bzw. der externen Recheneinrichtung 5 hinterlegt. Zur Simulation führt die CNC-Steuerung 3 bzw. die externen Recheneinrichtung 5 insbesondere dasselbe Teileprogramm aus, das auch bei der realen Bearbeitung durch die CNC-Steuerung 3 ausgeführt wird. Die simulierte Bearbeitung kann auf dem Display 17 der CNC-Steuerung 3 und/oder einem Display der externen Recheneinrichtung 5 visuell veranschaulicht werden.

Vorteilhaft ist bei dem Ausführungsbeispiel nach FIG 1 die Werkzeugspindel 10 in Form einer erfindungsgemäßen Spindel ausgeführt, die einen erfindungsgemäßen Lagerflansch (aus FIG 1 nicht ersichtlich) umfasst.

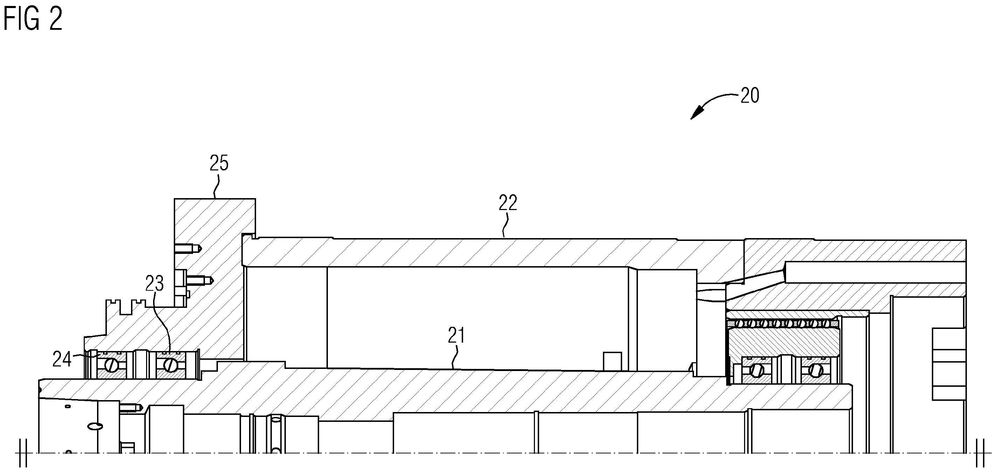

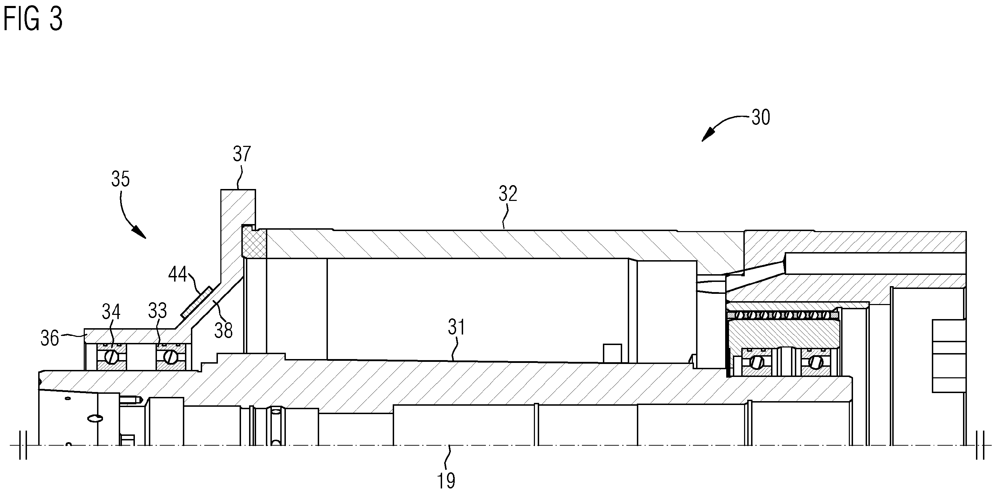

FIG 2 zeigt eine Schnittdarstellung einer herkömmlichen Motorspindel 20. Daraus ersichtlich sind insbesondere eine Spindelwelle bzw. Motorwelle 21, ein Gehäuse (Spindelgehäuse) 22, Wälzlager 23 und 24 sowie ein Lagerflansch 25 zur Befestigung und Fixierung der Wälzlager 23 und 24. Wie aus der Figur weiterhin ersichtlich ist, ist der Lagerflansch 25 massiv ausgeführt und weist daher eine hohe Steifigkeit auf. Auf Details des Motors, die für die Erfindung unerheblich sind, wurde zugunsten der besseren Übersichtlichkeit in den Figuren (insbesondere FIG 2 und FIG 3) verzichtet.

FIG 3 zeigt im Unterschied zu FIG 2 eine Schnittdarstellung einer erfindungsgemäßen Motorspindel 30, die eine Spindelwelle bzw. Motorwelle 31, ein Gehäuse 32 sowie die beiden Wälzlager 33 und 34 umfasst. Ferner ist ein Lagerflansch 35 ersichtlich, der auch hier zur Befestigung und Fixierung von Wälzlagern 33 und 34 dient, sich im Aufbau jedoch grundlegend von dem aus FIG 2 ersichtlichen Lagerflansch 25 unterscheidet. Ergänzend wird noch darauf hingewiesen, dass - anders als in den FIG 2 und 3 dargestellt - anstatt der beiden Spindellager bzw. Wälzlager 33 und 34 auch Ausführungsformen mit lediglich einem Lager, z.B. dem Lager 33, in diesem Bereich der Spindel üblich und von der Erfindung umfasst sind.

Auch der Lagerflansch 35 dient zur Aufnahme der Spindellager 33, 34 und zur Befestigung an dem Spindelgehäuse. Im Unterschied zu dem Lagerflansch 25 lässt sich der Lagerflansch 35 jedoch in wenigstens 3 funktional unterschiedliche Bereiche unterteilen: ein Lageraufnahmeteil 36 zur Aufnahme der Spindellager 33, 34, ein Befestigungsteil 37 zur Befestigung des Lagerflansches 35 an dem Spindelgehäuse 32 sowie ein elastisch verformbares Verbindungsmittel 38, durch welches das Lageraufnahmeteil 36 und das Befestigungsteil 37 elastisch miteinander verbunden sind.

Das elastisch verformbare Verbindungsmittel 38 ist im Ausführungsbeispiel als Anzahl an Streben 38 ausgeführt, die jeweils um einen Winkel von ca. 45° gegenüber einer Spindelachse 39 geneigt sind.

Die Erfindung sieht vor, dass der Lagerflansch ein Sensorelement zum Bestimmen einer elastischen Verformung des Lagerflansches infolge einer äußeren, auf die Spindel ausgeübten Kraft aufweist.

Bei dem Ausführungsbeispiel der Erfindung gemäß FIG 3 weist das elastisch verformbare Verbindungsmittel in Form von Streben 38 wenigstens ein Sensorelement, insbesondere einen Dehnungsmessstreifen (DMS) 44, zum Bestimmen einer elastischen Verformung der Streben 38 auf. Vorteilhaft sind insbesondere genau 4 Dehnungsmessstreifen gleichmäßig, das heißt bezüglich einer Spindelachse 19 um ca. 90° versetzt, an dem Lagerflansch 35 angebracht, z.B. aufgeklebt. Mittels der Dehnungsmessstreifen 44 kann die elastische Verformung der Streben 38 gemessen und damit auf die auf die Spindel einwirkende Kraft und deren Kraftrichtung sehr genau rückgeschlossen werden. Die Kenntnis der Kraft bzw. Kraftrichtung kann in der CNC-Steuerung 3 (siehe FIG 1) dazu verwendet werden, die Bearbeitung des Werkstücks betreffende Steuerparameter, z.B. die Vorschubgeschwindigkeit, anzupassen bzw. zu optimieren.

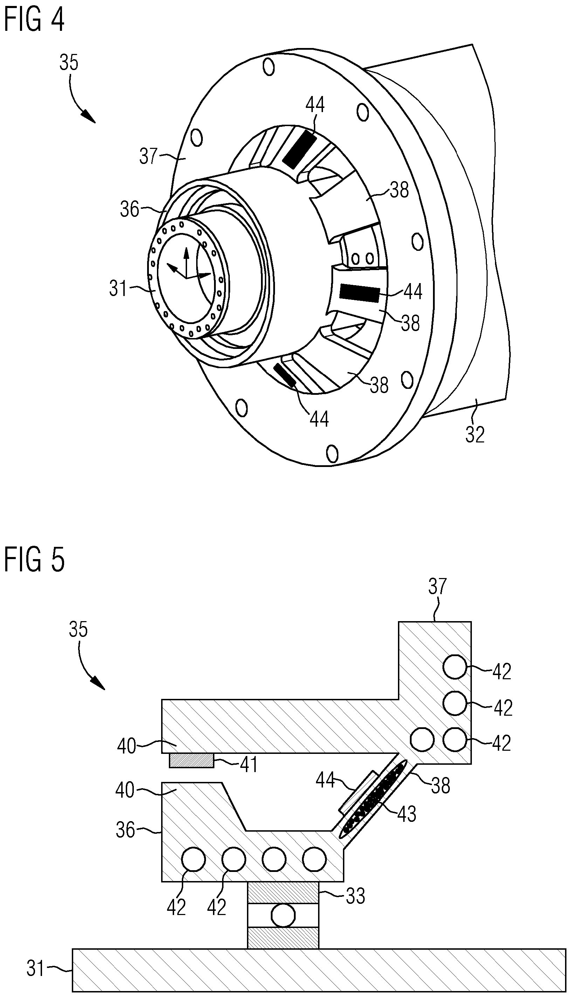

Zur besseren Veranschaulichung sind der Lagerflansch 35 mit dem Lageraufnahmeteil 36, dem Befestigungsteil 37, dem elastisch verformbaren Verbindungsmittel in Form einer Anzahl an Streben 38 sowie den Sensorelementen in Form von Dehnungsmessstreifen 44 in FIG 4 nochmals in räumlicher Ansicht dargestellt.

Eine bevorzugte Ausführungsformen des erfindungsgemäßen Lagerflansches 35 zeigt FIG 5.

So kann bei einem erfindungsgemäßen Lagerflansch ein Anschlag vorhanden sein, im Ausführungsbeispiel gemäß FIG 5 in Form der Anformungen 40, die den Bewegungsspielraum der elastischen Verformung einschränken bzw. auf eine maximal möglichen Verformung begrenzen. Weiterhin kann - wie in FIG 5 gezeigt - im Bereich des Anschlags 40 ein Dämpfungsmittel 41 vorhanden sein, z.B. ein Elastomer oder ein Squeezefilm, das insbesondere im Bereich des Maximums der elastischen Verformung eine dämpfende Wirkung bewirkt. Das Dämpfungsmittel 41 ist ebenso wie der Anschlag 40 insbesondere ringförmig ausgebildet mit der Spindelachse (in FIG 5 nicht dargestellt) als Symmetrieachse.

Ferner können bei einem erfindungsgemäßen Lagerflansch Kühlkanäle 42 vorhanden sein, die eine optimierte Lagerentwärmung ermöglichen.

Weiterhin umfasst der erfindungsgemäße Lagerflansch vorzugsweise in dem Bereich, in dem in Folge einer äußeren Kraft die größte Verformung bei dem elastisch verformbaren Verbindungsmittel, im Ausführungsbeispiel der Strebe 38, auftritt, wenigstens einen mit einem Dämpfungsmittel gefüllten Hohlraum 43, wodurch die elastische Verformung gedämpft wird. Als Dämpfungsmittel eignen sich insbesondere Pulverpartikel, die infolge der Reibung eine Dämpfung (Partikeldämpfung) bewirken.

Die genannten besonderen Merkmale des erfindungsgemäßen Lagerflansches können insbesondere dann einfach und kostengünstig verwirklicht werden, wenn der Lagerflansch ganz oder zumindest teilweise in einem 3D-Druck-Verfahren hergestellt wird. Die Ausbildung der Streben, der Kühlkanäle, der Anschlagelemente mit dem Dämpfungsring und der pulvergefüllten Kammern zur Dämpfung sind so besonders einfach und insbesondere in einem Arbeitsgang möglich.

Die in FIG 5 in Kombination gezeigten, zusätzlichen Merkmale (Anschlagelemente 40, Dämpfungsmittel 41, Kühlkanäle 42, mit einem Dämpfungsmittel gefüllte Hohlräume 43) können bei einem erfindungsgemäßen Lagerflansch auch jeweils einzeln, das heißt nicht in Kombination mit weiteren bzw. allen gezeigten Merkmalen bzw. in beliebiger Kombination vorhanden sein können.

Gegenüber einem standardmäßig massiv ausgeführten Lagerflansch lässt sich durch den Einsatz einer erfindungsgemäßen Spindel mit einem erfindungsgemäßen Lagerflansch bei einer Werkzeugmaschine eine deutlich höhere Zustellung (Eingriffsbreite und -tiefe) der Werkzeuge beim Fräsprozess realisieren und so die Fräsleistung bzw. die Produktivität steigern. Das wenigstens eine, direkt am Lagerflansch angebrachte Sensorelement erlaubt in einfacher und kostengünstiger Weise die Kontrolle der auf die Spindel ausgebübten Kräfte während der Bearbeitung eines Werkstücks. Insbesondere können so auch während der Bearbeitung auftretende dynamische Lastspitzen erfasst werden. Damit können die Möglichkeiten der Spindel voll ausgeschöpft werden, ohne diese zu überlasten. Insbesondere können während der laufenden Bearbeitung Steuerparameter angepasst werden, um einen optimalen Betrieb der Maschine zu gewähren. Vorteilhaft können mittels einer erfindungsgemäßen Spindel bzw. einem erfindungsgemäßen Lagerflansch Ratterschwingungen zu höheren Zustellungen verschoben werden. Bei der Wahl defensiver Fräsparameter zeigt sich, dass der Fräsprozess weniger anfällig gegenüber Rattern und somit insgesamt stabiler ist.

Vorteilhaft erlaubt es die die aus FIG 1 ersichtliche CNC-Steuerung 3, ggf. in Verbindung mit der externen Recheneinrichtung 5, die Bearbeitung des Werkstücks 16 mittels der Werkzeugmaschine 2 zunächst zu simulieren. Hierfür wird ein digitaler Zwilling der Werkzeugmaschine 2 verwendet. Daher ist es vorteilhaft, auch für die erfindungsgemäße Spindel 10 mit einem erfindungsgemäßen Lagerflansch (vgl. FIG 3 bis 5) einen digitalen Zwilling der Spindel 10 bzw. des Lagerflansches bereitzustellen. Dadurch können auch die Eigenschaften der Spindel 10 bzw. des Lagerflansches mit in die Simulation einbezogen werden, wodurch diese noch genauer und realitätsnäher wird.

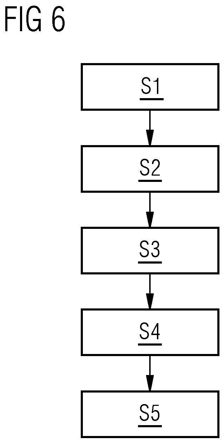

FIG 6 veranschaulicht Verfahrensschritte bei einem erfindungsgemäßen Verfahren zum Erfassen einer Kraft, die während der Bearbeitung eines Werkstücks durch ein Werkzeug mittels einer Maschine auf die Maschine einwirkt.

In einem ersten Verfahrensschritt S1 wird in einer Maschine, vorzugsweise einer Werkzeugmaschine oder einem Roboter, wenigstens eine Spindel zur Befestigung und/oder Bewegung eines Werkzeugs oder Werkstücks bereitgestellt, wobei die Spindel wenigstens ein Spindelgehäuse, ein Spindellager und einen Lagerflansch zur Aufnahme des Spindellagers und zur Befestigung an dem Spindelgehäuse umfasst, wobei der Lagerflansch wenigstens ein Lageraufnahmeteil zur Aufnahme des Spindellagers und ein Befestigungsteil zur Befestigung des Lagerflansches an dem Spindelgehäuse aufweist, wobei das Lageraufnahmeteil und das Befestigungsteil durch wenigstens ein elastisch verformbares Verbindungsmittel elastisch miteinander verbunden sind und wobei das elastisch verformbare Verbindungsmittel wenigstens ein Sensorelement aufweist.

In einem zweiten Verfahrensschritt S2 wird während einer Bearbeitung eines Werkstücks mit der Maschine infolge der elastischen Verformung des elastisch verformbaren Verbindungsmittels mittels des Sensorelements ein Sensorsignal in Abhängigkeit der elastischen Verformung erzeugt.

In einem Verfahrensschritt S3 erfolgt eine Auswertung des Sensorsignals mittels einer Auswerteeinrichtung zum Bestimmen einer Kraft, die auf die Spindel einwirkt. Dabei kann von der Kraft auch die Kraftrichtung umfasst sein, aus der die Kraft auf die Spindel einwirkt.

Die Auswerteeinrichtung kann von der Steuereinrichtung (Steuerung) der Maschine umfasst sein. Alternativ kann die Auswertung des Sensorsignals auch außerhalb der Steuereinrichtung erfolgen und die Auswerteeinrichtung beispielsweise von der Spindel umfasst sein. Dann werden vorteilhaft von der externen Auswerteeinrichtung erzeugte Daten bezüglich der ermittelten Kraft auf die Steuereinrichtung übertragen.

In einem Verfahrensschritt S4 wird in Abhängigkeit der ermittelten Kraft eine Reaktion ausgelöst. Für die Reaktion gibt es vielfältige Möglichkeiten. So kann in der Steuereinrichtung der Maschine für die Kraft ein Schwellenwert vorgegeben sein und dann, wenn die gemessene Kraft den Schwellenwert übersteigt, z.B. ein Hinweis für einen Benutzer auf einem Display der Steuerung angezeigt oder ein Alarm ausgelöst werden. Es ist jedoch auch möglich, dass sich die gemessene Kraft direkt auf die Bearbeitung des Werkstücks auswirkt, z.B. dass in Abhängigkeit der Kraft Steuerparameter der Steuerung, z.B. eine Vorschubgeschwindigkeit für das Werkzeug, angepasst werden. Insbesondere werden die Steuerparameter mittels der Steuereinrichtung automatisch derart bestimmt und eingestellt, dass die Spindel optimal ausgelastet, aber nicht überlastet wird und Ratterschwingungen vermieden werden.

Weiterhin werden in einem Verfahrensschritt S5 die erfassten Sensorsignale und/oder aus deren Auswertung gewonnene Daten in einem Datenspeicher innerhalb und/oder außerhalb der Steuereinrichtung gespeichert und ggf. weiterverarbeitet, z.B. in Form eines Logbuches, eines Eventtracker o.ä, eines Fahrtenschreibers zur Dokumentation der Lasthistorie durch Anschluss eines IPCs, Edge-devices o.ä, etc. Insbesondere können aus der Kraftinformation Kennwerte mit Aussagen zur Spindelbelastung, insbesondere in bestimmten Betriebssituationen der betreffenden Maschine, berechnen bzw. abgeleitet werden.

## Patentansprüche

1. Spindel (10, 30), insbesondere Werkzeug- und/oder Werkstückspindel, umfassend wenigstens ein Spindelgehäuse (32), ein Spindellager (33, 34) und einen Lagerflansch (35) zur Aufnahme des Spindellagers (33, 34) und zur Befestigung an dem Spindelgehäuse (32), wobei der Lagerflansch (35) wenigstens ein Lageraufnahmeteil (36) zur Aufnahme des Spindellagers (33, 34) und ein Befestigungsteil (37) zur Befestigung des Lagerflansches (35) an dem Spindelgehäuse (32) aufweist, **dadurch gekennzeichnet, dass** der Lagerflansch (35) wenigstens ein Sensorelement (44) zum Bestimmen einer elastischen Verformung des Lagerflansches (35) infolge einer äußeren, auf die Spindel (10, 30) ausgeübten Kraft aufweist.

2. Spindel (10, 30) nach Anspruch 1, wobei das Lageraufnahmeteil (36) und das Befestigungsteil (37) durch wenigstens ein elastisch verformbares Verbindungsmittel (38) elastisch miteinander verbunden sind und wobei das Sensorelement (44) von dem elastisch verformbaren Verbindungsmittel (38) umfasst oder an dem elastisch verformbaren Verbindungsmittel (38) angeordnet ist zum Bestimmen einer elastischen Verformung des elastisch verformbaren Verbindungsmittels (38).

3. Spindel (10, 30) nach Anspruch 2, wobei das elastisch verformbare Verbindungsmittel (38) wenigstens einen Stab und/oder eine Strebe, insbesondere eine Vielzahl an Stäben und/oder Streben umfasst oder als Stab und/oder Strebe, insbesondere als Vielzahl an Stäben und/oder Streben ausgebildet ist und wobei wenigstens ein Sensorelement (44) an wenigstens einem Stab und/oder wenigstens einer Strebe angeordnet ist.

4. Spindel (10, 30) nach Anspruch 2 oder 3, wobei das Lageraufnahmeteil (36), das Befestigungsteil (37) und das elastisch verformbare Verbindungsmittel (38) einstückig ausgebildet sind.

5. Spindel (10, 30) nach einem der vorherigen Ansprüche, wobei das elastisch verformbare Verbindungsmittel (38) um einen Winkel im Bereich von 30° bis 60°, insbesondere 45°, gegenüber einer Spindelachse (19) geneigt ist.

6. Spindel (10, 30) nach einem der vorherigen Ansprüche, wobei vier elastische Verbindungselemente, die jeweils mit einem Sensorelement (44) verbunden sind, jeweils um 90° versetzt bezüglich einer bzw. der Spindelachse (19) an dem Lagerflansch (35) angeordnet sind.

7. Spindel (10, 30) nach einem der vorherigen Ansprüche, wobei der Lagerflansch (35) in einem 3D-Druck-Verfahren hergestellt ist.

8. Spindel (10, 30) nach einem der vorherigen Ansprüche, wobei das Sensorelement (44) als Dehnungsmessstreifen (44) ausgebildet ist.

9. Spindel (10, 30) nach einem der vorherigen Ansprüche, wobei die Spindel als Motorspindel ausgebildet ist und der Lagerflansch (35) als Lagerschild der Motorspindel ausgebildet ist.

10. Lagerflansch (35) für eine Spindel (10, 30), insbesondere eine Werkzeug- oder Werkstückspindel, umfassend wenigstens ein Lageraufnahmeteil (36) zur Aufnahme des Spindellagers (33, 34) und ein Befestigungsteil (37) zur Befestigung des Lagerflansches (35) an einem Spindelgehäuse (32), **dadurch gekennzeichnet, dass** der Lagerflansch (35) wenigstens ein Sensorelement (44) zum Bestimmen einer elastischen Verformung des Lagerflansches (35) infolge einer äußeren, auf die Spindel (10, 30) ausgeübten Kraft aufweist.

11. Lagerflansch (35) nach Anspruch 10, wobei das Lageraufnahmeteil (36) und das Befestigungsteil (37) durch wenigstens ein elastisch verformbares Verbindungsmittel (38) elastisch miteinander verbunden sind und wobei das Sensorelement (44) von dem elastisch verformbaren Verbindungsmittel (38) umfasst oder an dem elastisch verformbaren Verbindungsmittel (38) angeordnet ist zum Bestimmen einer elastischen Verformung des elastisch verformbaren Verbindungsmittels (38).

12. Lagerflansch (35) nach Anspruch 10 oder 11, wobei das elastisch verformbare Verbindungsmittel (38) wenigstens einen Stab und/oder eine Strebe, insbesondere eine Vielzahl an Stäben und/oder Streben umfasst oder als Stab und/oder Strebe, insbesondere als Vielzahl an Stäben und/oder Streben ausgebildet ist und wobei wenigstens eine Sensorelement (44) an wenigstens einem Stab und/oder wenigstens einer Strebe angeordnet ist.

13. Maschine, insbesondere Werkzeugmaschine (2) oder Roboter, umfassend eine Spindel (10, 30) nach einem der Ansprüche 1 bis 9.

14. Verfahren zum Erfassen einer Kraft, die während der Bearbeitung eines Werkstücks (16) durch ein Werkzeug (13) mittels einer Maschine (2) auf die Maschine (2) einwirkt, wobei die Maschine (2) wenigstens eine Spindel (10, 30) zur Befestigung und/oder Bewegung eines Werkzeugs (13) oder Werkstücks (16) umfasst, wobei die Spindel (10, 30) wenigstens ein Spindelgehäuse (32), ein Spindellager (33, 34) und einen Lagerflansch (35) zur Aufnahme des Spindellagers (33, 34) und zur Befestigung an dem Spindelgehäuse (32), wobei der Lagerflansch (35) wenigstens ein Lageraufnahmeteil (36) zur Aufnahme des Spindellagers (33, 34) und ein Befestigungsteil (37) zur Befestigung des Lagerflansches (35) an dem Spindelgehäuse (32) aufweist, wobei das Lageraufnahmeteil (36) und das Befestigungsteil (37) durch wenigstens ein elastisch verformbares Verbindungsmittel (38) elastisch miteinander verbunden sind und wobei das elastisch verformbare Verbindungsmittel (38) wenigstens ein Sensorelement (44) aufweist, mit dem eine elastische Verformung des elastisch verformbaren Verbindungsmittels (38) bestimmt wird und wobei anhand der elastischen Verformung auf die für diese elastische Verformung ursächliche Kraft rückgeschlossen wird.
